# EUROPÄISCHE PATENTSCHRIFT

(11) **EP 0 982 341 B1**
(45) Veröffentlichungstag und Bekanntmachung des Hinweises auf die Patenterteilung: **28.05.2003**
(21) Anmeldenummer: 99115957.5
(22) Anmeldetag: 13.08.1999
(51) Int. Cl.: C08G 65/26, C08G 65/30, B01D 3/00, C07C 41/42, C07C 41/34

(54) **Verfahren zur Herstellung von Polyetherpolyolen**
Process for the production of polyether-polyols
Procédé pour la préparation de polyols de polyéther

(30) Priorität: 21.08.1998 DE 19838156
(43) Veröffentlichungstag der Anmeldung: 01.03.2000
(73) Patentinhaber: BASF AKTIENGESELLSCHAFT, 67056 Ludwigshafen (DE)
(72) Erfinder: Wetterling, Monika, 01968 Senftenberg (DE); Güttes, Bernd, 03238 Sallgast (DE); Hoeppner, Gerd, 01987 Schwarzheide (DE); Grossmann, Hans-Jürgen, 01945 Ruhland (DE)

(56) Entgegenhaltungen:
- EP-A- 0 819 712
- EP-A- 0 864 598
- DD-A- 142 348
- DE-A- 2 204 515
- DE-A- 19 519 680
- US-A- 4 306 943

## Beschreibung

Die Erfindung betrifft ein Verfahren zur Herstellung von Polyetherpolyolen durch basisch katalysierte Umsetzung von H-funktionellen Startsubstanzen mit Alkylenoxiden, anschließende Neutralisation des basischen Katalysators und eine spezielle mehrstufige Behandlung des Rohproduktes. Die Polyetherpolyole werden für die Herstellung von Polyurethanen (PUR), insbesondere von PUR-Schäumen, eingesetzt. Vorzugsweise Anwendung finden sie in PUR-Weichschäumen für den Auto- und Möbelpolsterbereich.

Die Herstellung von Polyetherpolyolen ist seit langem bekannt. Die Polyetherolsynthese nach der anionischen Polymerisation wird insbesondere unter Einsatz von Alkali- und Erdalkalihydroxiden, und bei Temperaturen von 60 bis 140 °C und erhöhten Drücken durchgeführt. Nach der Synthese wird zur Entfernung des Katalysators mittels Säure, insbesondere Salz- und/oder Phosphorsäure, neutralisiert, zur Entfernung von Wasser und anderen leichtflüchtigen Bestandteilen destilliert, insbesondere unter Vakuum und bei Temperaturen von 80 bis 130 °C, und abschließend werden die Salze entfernt.

Näheres hierzu kann dem Kunststoffhandbuch, Band VII, Polyurethane, Carl-Hanser-Verlag, München, 1. Auflage 1966, herausgegeben von Dr. R. Vieweg und Dr. A. Höchtlen, sowie 2. Auflage 1983 und 3. Auflage 1993, herausgegeben von Dr. G. Oertel, entnommen werden.

Bei diesem Herstellungsverfahren entstehen neben den Zielprodukten, den Polyetherpolyolen mit unterschiedlichen Molekulargewichten, eine Vielzahl von Nebenprodukten, die die Anwendung der Polyetherpolyole zur Herstellung von PUR auf verschiedene Weise stören. Sie können den Schäumvorgang negativ beeinflussen, die wichtigsten physiko-mechanischen Schaumwerte, wie Härte oder Elastizität, verschlechtern und infolge geringer Flüchtigkeit zunächst im PUR verbleiben und nach und nach störenden Geruch und Fogging-Effekte verursachen.

Insbesondere für bestimmte Anwendungen des PUR-Weichschaumes im Möbelbereich und in der Textilbeschichtung ist der Geruch der PUR-Schäume problematisch. Die von den PUR-Katalysatoren und den PUR-Hilfs- und Zusatzstoffen ausgehenden Ursachen für die Geruchsproblematik werden durch Umstellung auf höhersiedende, schwerer flüchtige Substanzen mit niederen Dampfdrücken und Einsatz von einbaubaren Katalysatoren, z.B. des Spaceramintyps gemäß EP-A-0539819, beseitigt. Die von den Polyolen herrührenden und Geruch verursachenden Substanzen können, analog der Entfernung von cyclischen Ethern bzw. ungesättigten Polyolbestandteilen, wie im US-A-4251654 bzw. EP-A-0576132 beschrieben, durch Extraktion mit Wasser oder Glykolen entfernt werden. Damit wird aber nur eine sehr begrenzte Anzahl von leichtflüchtigen Substanzen entfernt, andere lagern sich bei diesen Bedingungen zu geruchsintensiven Substanzen erst um (Acetalbildung bzw. -spaltung). Die bei der üblichen Reinigungsoperation zur Katalysatorentfernung durchgeführte Destillation zur Wasserentfernung beseitigt, wie z.B. in DD-A-216248 beschrieben, zusätzlich auch leichtflüchtige Bestandteile. Bei der Neutralisation und nachgeschalteten Wasserentfernung kommt es zu laufenden pH-Wert-Veränderungen und damit zu einer Vielzahl von Umlagerungen der Geruchsbildner (Aldehyde, Dioxane) oder, wie in WO-A-9318083 beschrieben und beabsichtigt, sogar zu Verschiebungen der Molekulargewichtszusammensetzung.

Bei der in EP-A-0819712 dargestellten kombinierten thermisch-destillativen Behandlung von Polyetherpolyolen erfolgt zwar eine Entfernung wichtiger geruchsintensiver Stoffe, aber eine Reihe von Nebenprodukten werden in einer Gleichgewichtsreaktion ständig nachgebildet. Zu deren Entfernung reicht eine rein physikalische Behandlung nicht aus. Ähnlich arbeiten Destillationsverfahren, wie z.B. nach EP-A-0579988, zur Herstellung von foggingarmen Polyesterpolyolen. Mit derart rein destillativen Verfahren sind bestimmte Nebenprodukte der Polyetherpolyolherstellung nicht ausreichend zu entfernen, zumal man bei diesen Polyolen im Temperaturbereich unterhalb 150 °C bleiben muß. Hohe Abreicherungsraten von > 95% bei qualitätsbeeinflussenden Nebenprodukten in Polyolen sind bisher nur in aufwendigen Apparaten erreichbar. Dies führt zu hohen Investitionskosten aufgrund der eingesetzten teuren Apparaturen, wie Kurzwegverdampfern oder Extrudern. Ein besseres Abreicherungsergebnis ist auch bei sehr langen Verweilzeiten in einfachen Apparaten, wie z.B. Rührkesseln, möglich. Dies führt jedoch zu geringen Ausbeuten und zu unvertretbaren Produktschädigungen und -verfärbungen. Außerdem wird in EP-A-0819712 die kombinierte thermisch-destillative Behandlung entweder während oder insbesondere nach der Alkylenoxidanlagerung bei einem pH-Wert < 7 in einem einstufigen Schritt, z.B. in einer Füllkörperkolonne, durchgeführt. Durch das Arbeiten im sauren Bereich kommt es während der thermisch-destillativen Behandlung zu weiteren sauer gesteuerten Umlagerungs- und Bildungsreaktionen und es entstehen erneut unerwünschte Nebenprodukte. Weiterhin stören bei einigen Behandlungsmöglichkeiten die in hohen Anteilen noch vorhandenen Salze. Auch sie können weitere Nebenreaktionen katalysieren bzw. initiieren.

Die in der eigenen DE-Patentanmeldung Nr. 19710443.6 beschriebene kombinierte Behandlung, bestehend aus einem thermisch-reaktiven und einem thermisch-destillativen Schritt, bringt zwar eine weitere Optimierung der Entfernung von verschiedenartigen unerwünschten Nebenprodukten, allerdings wird auch hier im pH-Bereich < 7, insbesondere < 6, gearbeitet, wodurch sauer gesteuerte Nebenreaktionen, wie die Entstehung aliphatischer und cyclischer Acetale, Dioxane, Aldehyde und Alkylalkohole, begünstigt werden und der Nebenproduktpegel wieder steigt.

Der Erfindung lag daher die Aufgabe zugrunde, ein Verfahren zur Herstellung von Polyetherpolyolen durch übliche basisch katalysierten Umsetzung von H-funktionellen Startsubstanzen mit Alkylenoxiden und nachfolgender Reinigung der Rohpolyetherpolyole zur Katalysator- und Nebenproduktentfernung zu entwickeln, das die im basischen und sauren Bereich entstehenden qualitätsbeeinflussenden Nebenprodukte in einer hohen Abreicherungsrate entfernt und bei hoher Raum-/Zeitausbeute weitere Produktschädigungen vermeidet.

Diese Aufgabe wurde erfindungsgemäß dadurch gelöst, daß der durch übliche basisch katalysierte Umsetzung von H-funktionellen Startsubstanzen mit Alkylenoxiden hergestellte Rohpolyether einer kombinierten Behandlung in mehreren reaktiv-destillativen Schritten und einer aus mehreren Schritten bestehende Feststoffabtrennung bei einem pH-Wert von größer oder gleich 6,5 unterzogen wird, wobei der erste reaktiv-destillative Schritt bei einem Restsalzgehalt von 20 bis 300 ppm K⁺ erfolgt.

Gegenstand der Erfindung ist somit ein Verfahren zur Herstellung von Polyetherpolyolen durch basisch katalysierte Umsetzung von H-funktionellen Startsubstanzen mit Alkylenoxiden, anschließende Neutralisation des basischen Katalysators und eine spezielle Behandlung des Rohproduktes, das dadurch gekennzeichnet ist, daß die Behandlung eine Kombination aus mehreren reaktiv-destillativen Schritten und einer aus mehreren Schritten bestehenden Feststoffabtrennung ist und bei einem pH-Wert von größer/gleich 6,5 durchgeführt wird und der erste reaktiv-destillative Schritt bei einem Restsalzgehalt von 20 bis 300 ppm K⁺ erfolgt. Gegenstand der Erfindung ist weiterhin die Verwendung der nach diesem Verfahren hergestellten Polyetherpolyole zur Herstellung von PUR, insbesondere fogging- und geruchsarmen PUR-Schaumstoffen.

Die erfindungsgemäße kombinierte Behandlung ist bei allen Polyetherpolyolen, die durch basisch katalysierte Anlagerung von Alkylenoxiden an H-funktionelle Startsubstanzen hergestellt wurden, anwendbar.

Die Herstellung derartiger Produkte erfolgt nach den aus dem Stand der Technik bekannten Verfahren. Dabei wird üblicherweise die H-, insbesondere OH- und/oder NH- bzw. NH₂-funktionelle Startsubstanz mit dem basischen Katalysator in einer Menge von 0,05 bis 1 Gew.-% vermischt, das dabei entstehende Wasser entfernt und danach das niedere Alkylenoxid, insbesondere Ethylen- und/oder Propylenoxid, zudosiert und zur Reaktion gebracht.

Als OH-funktionelle Startsubstanzen kommen zumeist mehrfunktionelle, insbesondere zwei- und/oder dreifunktionelle, Verbindungen, wie Glykole, beispielsweise Ethylenglykol und Propylenglykol, Glycerin und Trimethylolpropan, aber auch höherfunktionelle Alkohole und Zuckeralkohole, wie Glucose oder Saccharide, in Frage. Besonders vorteilhaft ist der Einsatz von Glycerin und/oder Trimethylolpropan einzeln oder im Kombination mit Anteilen an Glykolen.

Als NH- oder NH₂-funktionelle Verbindungen können sowohl aliphatische als auch aromatische ein- oder mehrfunktionelle primäre oder sekundäre Amine eingesetzt werden. Auch Wasser kann als Startsubstanz eingesetzt werden. Häufig werden Gemische der genannten Verbindungen als Starter eingesetzt.

Insbesondere zur Umsetzung von bei Reaktionstemperatur hochviskosen oder festen Startsubstanzen werden flüssige Coinitiatoren genutzt, um einen homogenen Reaktionsstart zu ermöglichen. Das gilt für Zucker, wie Sorbit oder Saccharose, aber auch für aromatische Amine, wie Toluylendiamin oder Methyldiphenyldiamin und deren Homologe. Als Coinitiatoren dienen hierbei insbesondere Glykole, Glyzerin oder auch Wasser.

Nach Zugabe des alkalischen Katalysators und gegebenenfalls der Entfernung des entstehenden Wassers erfolgt die Dosierung der Alkylenoxide. Aus Sicherheitsgründen wird das Reaktionsgefäß vorher mit Inertgas, insbesondere Stickstoff, inertisiert.

Als niedere Alkylenoxide werden insbesondere Ethylenoxid (EO), Propylenoxid (PO) und/oder Butylenoxid (BO), vorzugsweise EO und 1,2-PO, eingesetzt. Die Alkylenoxide werden einzeln blockweise und/oder als statistisches Gemisch angelagert.

Als Katalysatoren werden basische Verbindungen, insbesondere Alkali- bzw. Erdalkalihydroxide und/oder Amine, verwendet. Besonders bevorzugt wird Kaliumhydroxid eingesetzt.

Die Umsetzung erfolgt unter üblichen Reaktionsbedingungen, insbesondere bei Temperaturen von 80 bis 150 °C und druckloser Fahrweise oder einem Druck bis 1,0 MPa. Im erfindungsgemäßen Verfahren wird vorteilhafterweise bei einem leichten Überdruck bis 8 bar gearbeitet.

Im so hergestellten Rohpolyetherpolyol wird anschließend auf übliche Art und Weise, beispielsweise durch Säureneutralisationsverfahren, der basische Katalysator neutralisiert.

Erfindungsgemäß wird das entstandene Polyetherpolyol einer speziellen Behandlung unterzogen. Diese Behandlung ist eine Kombination aus mehreren reaktiv-destillativen Schritten und einer aus mehreren Schritten bestehenden Feststoffabtrennung.

Die Behandlung wird bei einem pH-Wert von mindestens 6,5, vorzugsweise von 6,5 bis 9,5, durchgeführt. Die Einstellung des pH-Wertes erfolgt in üblicher Art und Weise, insbesondere durch entsprechende Wahl des Verhältnisses von Säure zum Katalysator während der oben genannten Katalysatorneutralisationsphase.

Vorzugsweise wird die Feststoffabtrennung in zwei Stufen durchgeführt, wobei eine Grobabtrennung bis zu einem Feststoffgehalt von 20 bis 300 ppm K⁺, vorzugsweise von 50 bis 250 ppm K⁺, vor und eine weitere Feinabtrennung bis zu einem Feststoffgehalt von höchstens 10 ppm K⁺, nach der mehrstufigen Destillation erfolgt.

Zur Feststoffabtrennung eignen sich alle üblicherweise zu diesem Zweck einsetzbaren Verfahren, wie beispielsweise Zentrifugieren und Filtrieren. Vorzugsweise erfolgt die Feststoffabtrennung in der ersten Stufe durch ein- oder mehrmaliges Zentrifugieren und in der zweiten Stufe durch ein- oder mehrmalige Filtration, insbesondere Druckfiltration.

Die reaktiv-destillative Phase wird vorzugsweise zweistufig durchgeführt. Hierzu wird vorteilhafterweise eine Kombination aus einer Normaldruckkolonne und einer Vakuumkolonne oder aus zwei Vakuumkolonnen eingesetzt.

Die Destillationskolonnen werden üblicherweise mit Inertgas, insbesondere Stickstoff, betrieben.

Erfindungsgemäß wird der erste reaktiv-destillative Schritt bei einem Restsalzgehalt von 20 bis 300 ppm K⁺, vorzugsweise bei einem Restsalzgehalt von 50 bis 250 ppm K⁺, begonnen.

Das Polyetherpolyol besitzt üblicherweise vor der ersten Destillationsstufe eine Wassergehalt von 0,5 bis 5,0 Gew.-% und wird auf vorzugsweise 120 bis 140°C erwärmt.

Die Destillation in der ersten Destillationskolonne wird üblicherweise bei einer Temperatur von 140 bis 170°C und einem N₂-Durchsatz von 200 bis 500 m³/h (wobei m³ = Norm-m³ bedeutet) mit einer Verweilzeit von 20 bis 40 min durchgeführt.

Im Ergebnis des ersten Destillationsschrittes entsteht ein Polyetherpolyol mit einem Wassergehalt von höchstens 0,1 Gew.-%, vorzugsweise 0,01 bis 0,1 Gew.-%.

Dieses Produkt wird in dem erfindungsgemäß vorgesehenen zweiten Destillationsschritt bei den folgenden vorzugsweisen Bedingungen, einer Temperatur von 100 bis 120°C, einem N₂-Durchsatz von 20 bis 70 m³/h, einem Vakuum von 5 bis 30 mbar und einer Verweilzeit von 5 bis 30 min, nachbehandelt.

Bei dem angegebenen pH-Wert von mindestens 6,5 und dem vorhandenen Salzgehalt von 20 bis 300 ppm K⁺ kommt es während des ersten reaktiv-destillativen Schrittes zu Reaktionen der Nebenprodukte untereinander und/oder mit den Salzen bzw. katalysiert durch die Salze, wie beispielsweise KC1 und Kaliumphosphate. Dabei werden hochsiedende Verbindungen gespalten und die niedrigsiedenden Spaltprodukte im zweiten destillativen Schritt entfernt. Darüber hinaus kommt es zur Umwandlung von geruchsbildenden in geruchlose Verbindungen. Da in der Regel nach der ersten Filtrationsstufe im Reaktionsprodukt noch Salze enthalten sind, können auch im zweiten Destillationsschritt und gegebenenfalls weiteren Destillationsschritten Nebenproduktumwandlungsreaktionen stattfinden.

Entscheidend für diese Spaltungs- und Umwandlungsreaktionen der geruchsbildenden Verbindungen, wie beispielsweise Aldehyde, Ketone und Chlorhydrin, sind ein pH-Wert von 6,5 bis 9,5, Restsalzgehalte von 20 bis 300 ppm K⁺, Temperaturen von 120 bis 140°C, eine intensive Durchmischung mit einem Inertgas und gegebenenfalls Wasserspuren von 0,1 Gew.-% und mehr.

Der Gehalt an geruchsbildenden Nebenprodukten liegt am Ende des ersten reaktiv-destillativen Schrittes vorzugsweise in einem Bereich von 100 bis 400 ppm, nach dem sich anschließenden zweiten reaktiv-destillativen Schritt vorzugsweise in einem Bereich von kleiner als 50 ppm, besonders bevorzugt bei 10 bis 30 ppm.

In einer besonders bevorzugten Ausführungsform weist das Rohpolyetherpolyol vor Eintritt in die erste Destillationsstufe einen pH-Wert von 6,5 bis 9,5, einen Salzgehalt von 20 bis 300 ppm K⁺, einen Gehalt an geruchsbildenden Nebenprodukten von meist mehr als 800 ppm, einen Wassergehalt von 0,5 bis 5 Gew.-% und eine Temperatur von 120 bis 140°C auf und wird danach in einer Destillationskolonne bei Temperaturen von 140 bis 170°C und einem N₂-Durchsatz von 200 bis 500 m³/h behandelt. Das so vorbehandelte Polyetherol mit einem pH-Wert von 6,5 bis 9,5, einem Salzgehalt von 20 bis 300 ppm K⁺, einen Gehalt an geruchsbildenden Nebenprodukten von 100 bis 400 ppm und einem Wassergehalt von 0,01 bis 0,1 Gew.-% wird in einer zweiten Destillationskolonne bei einer Temperatur von 100 bis 120°C, einem N₂-Durchsatz von 20 bis 70 m³/h, einem Vakuum von 5 bis 30 mbar und einer Verweilzeit von 5 bis 30 min nachbehandelt.

Die erfindungsgemäße kombinierte Behandlung kann gegebenenfalls durch übliche extraktive bzw. sorptive Behandlungen mit festen Sorptionsmitteln bzw. mit Extraktionsmitteln ergänzt werden, zur Erreichung der erfindungsgemäßen Ziele ist dies aber nicht erforderlich.

Das erfindungsgemäß hergestellte Polyetherpolyol ist geruchsarm. Es weist einen Geruchswert von höchstens 2, bestimmt nach internem Prüfverfahren PPU 03/03-04, auf. In Abhängigkeit vom jeweiligen Polyoltyp besitzen die Polyetherpolyole OH-Zahlen von vorzugsweise 20 bis 80 mg KOH/g. Die daraus hergestellten PUR-Materialien sind foggingarm.

Das erfindungsgemäße Verfahren hat den Vorteil, daß die durch übliche basisch katalysierte Alkylenoxidanlagerung an H-funktionelle Startsubstanzen hergestellten Polyetherole durch die erfindungsgemäße kombinierte Behandlung von den qualitätsbeeinflussenden Nebenprodukten in hoher Raum-/Zeitausbeute und mit hoher Abreicherungsrate befreit werden. Es werden während der Nachbehandlung weitere Produktschädigungen und vor allem die im sauren Bereich stattfindenden Nebenreaktionen gänzlich vermieden. Durch die kombinierte mehrstufige Feststoffabtrennung teils vor, teils nach der reaktiven und destillativen Behandlung wird der ursprüngliche Salzgehalt von > 1000 ppm K⁺ deutlich abgesenkt und der Restsalzgehalt von 20 bis 300 ppm K⁺ wirkt im vorhandenen basischen Bereich überraschenderweise desaktivierend auf ablaufende Nebenreaktionen. Es kommt auch nach der erfindungsgemäßen Behandlung zu keinerlei Nachbildungsreaktionen von qualitätsverschlechternden Nebenprodukten.

Dieses Polyetherpolyol eignet sich hervorragend zur Herstellung von PUR, insbesondere PUR-Schaumstoffen. Aufgrund seiner hervorragenden Geruchs- und Fogging-Werte ist es vorzugsweise in PUR-Weichschaumstoffen für Anwendungen im Auto- und Möbelbereich einsetzbar.

Die Herstellung der fogging- und geruchsarmen PUR-Schäume erfolgt in üblicher Weise durch Umsetzung der erfindungsgemäß behandelten Polyetherpolyole, gegebenenfalls im Gemisch mit weiteren höhermolekularen Verbindungen mit mindestens zwei reaktiven Wasserstoffatomen, mit organischen und / oder modifizierten organischen Polyisocyanaten und gegebenenfalls niedermolekularen Kettenverlängerungs- und/oder Vernetzungsmitteln in Gegenwart von Treibmitteln, Katalysatoren sowie gegebenenfalls weiteren Hilfsmitteln und/oder Zusatzstoffen.

Eine zusammenfassende Übersicht über einsetzbare Ausgangsstoffe sowie die Herstellung und Verwendung von PUR-Schaumstoffen ist der Fachliteratur, beispielsweise der Monographie von J.H. Saunders und K.C. Frisch "High Polymers", Band XVI, Polyurethanes, Teil 1 und 2, Verlag Interscience Publishers, 1962 bzw. 1964 oder dem Kunststoffhandbuch, Polyurethane, BandVII, Carl-Hanser-Verlag, München, Wien, 1., 2. und 3. Auflage, 1966, 1983 bzw. 1993, oder entsprechenden Patentschriften zu entnehmen.

Die Erfindung wird in den nachfolgenden Ausführungsbeispielen näher erläutert:

### Vergleichsbeispiel 1

1000 kg eines Polyetherpolyols, hergestellt aus 23 kg Glycerin, 882 kg PO und 95 kg EO, mit einer OH-Zahl von 50 mg KOH/g, einem Salzgehalt von 2500 ppm K⁺ und einem Gehalt an qualitätsbeeinflussenden Nebenprodukten von 600 ppm sowie einem pH-Wert von 6,2 wurden einer thermisch-destillativen Behandlung bei 130°C mit N₂ bei einer Gasgeschwindigkeit von 1,2 m/s und einem Druck von 25 mbar unterzogen. Nach einer zwischenzeitlichen Absenkung der qualitätsbeeinflussenden Nebenprodukte von 600 ppm auf 15 ppm kam es am Destillationsende und danach zum erneuten Anstieg der Nebenprodukte von 15 ppm auf 270 ppm. Daraus hergestellte PUR-Weichschaumstoffe verursachten Fogging und einen starken Geruch.

### Vergleichsbeispiel 2

1000 kg eines Polyetherpolyols gemäß Vergleichsbeispiel 1 wurden im Anschluß an die beschriebene Destillation und eine Filtration mit einem Salzgehalt von 10 ppm K⁺ und einem Gehalt an qualitätsbeeinflussenden Nebenprodukten von 430 ppm nochmals mit 0,25 kg H₃PO₄ versetzt. Das Produkt mit einem pH-Wert von 5,3 wurde auf 125 °C erhitzt und 1 h gerührt. Danach wurde das Polyetherpolyol in einer Kolonne mit folgenden Parametern destillativ behandelt:

| | |
|---|---|
| spezifische Oberfläche | 500 m²/m³ |
| Temperatur | 100 - 150 °C |
| Druck | 25 mbar |
| Druckverlust | < 1 mbar |
| Reinigungsmittel | N₂ |
| Gasgeschwindigkeit | 1,2 m/s |
| Flüssigkeitsbelastung | 8 m³/(m²·h) |

Nach einer Absenkung der qualitätsbeeinflussenden Nebenprodukte von 430 ppm auf 15 ppm kam es zum erneuten Anstieg der Nebenprodukte auf 180 ppm. Daraus hergestellte PUR-Weichschaumstoffe verursachten Fogging und einen starken Geruch.

### Ausführungsbeispiel 1

1000 kg eines Polyetherpolyols gemäß Vergleichsbeispiel 1 mit einem Salzgehalt von 2500 ppm K⁺ und einem pH-Wert von 6,2 wurden nach einer groben Feststoffabtrennung (über eine Zentrifuge) auf 150 ppm K⁺ mit einem pH-Wert von 8,1 einer kombinierten Destillation unterzogen. Im ersten Schritt erfolgte eine reaktive Destillation in einer Normaldruckkolonne bei 130°C Polyoltemperatur und einem N₂-Durchsatz von 370 m³/h, einer N₂-Temperatur von 150°C mit einer Absenkung des Wassergehaltes auf 0,04 Gew.-%. Nach der reaktiven Vorbehandlung wurde das Polyetherpolyol mit einem Salzgehalt von 95 ppm K⁺, einem pH-Wert von 8,0 ohne weitere thermische Behandlung sofort und direkt bei 110°C mit einem Stickstoffdurchsatz von 40 m³/h bei 15 mbar destillativ nachbehandelt. Nach der sich anschließenden Feinfiltration wies das Fertigpolyetherpolyol von ursprünglich 500 ppm Nebenprodukten noch 5 ppm auf, war völlig geruchsfrei und ermöglichte die Herstellung von foggingfreien, geruchslosen PUR-Weichschäumen.

### Ausführungsbeispiel 2

1000 kg eines Polyetherpolyols gemäß Vergleichsbeispiel 1 aber mit einem Salzgehalt von 3200 ppm K⁺ und einem pH-Wert von 6,3 wurden nach einer groben Feststoffabtrennung (über eine Zentrifuge) auf 80 ppm K⁺ und einen pH-Wert von 7,5 einer kombinierten Destillation unterzogen. Im ersten Schritt erfolgte eine reaktive Destillation in einer Normaldruckkolonne bei 130°C Polyoltemperatur und einem N₂-Durchsatz von 370 m³/h, einer N₂-Temperatur von 150°C mit einer Absenkung des Wassergehaltes auf 0,05 Gew.-%. Nach der reaktiven Vorbehandlung wurde das Polyetherpolyol mit einem Salzgehalt von 65 ppm K⁺ und einem pH-Wert von 7,2 ohne weitere thermische Behandlung sofort und direkt bei 110°C mit einem Stickstoffdurchsatz von 40 m³/h bei 15 mbar destillativ nachbehandelt.

Das Fertigpolyetherpolyol wies nach der Feinfiltration von ursprünglich 430 ppm Nebenprodukten noch 15 ppm auf, war völlig geruchsfrei und ermöglichte die Herstellung von foggingfreien, geruchslosen PUR-Weichschäumen.

## Patentansprüche

1. Verfahren zur Herstellung von Polyetherpolyolen durch basisch katalysierte Umsetzung von H-funktionellen Startsubstanzen mit Alkylenoxiden, anschließende Neutralisation des basischen Katalysators und eine spezielle Behandlung des Rohproduktes, **dadurch gekennzeichnet, daß** die Behandlung eine Kombination aus mehreren reaktiv-destillativen Schritten und einer aus mehreren Schritten bestehenden Feststoffabtrennung ist und bei einem pH-Wert von größer/gleich 6,5 durchgeführt wird und der erste reaktiv-destillative Schritt bei einem Restsalzgehalt von 20 bis 300 ppm K⁺ erfolgt.

2. Verfahren nach Anspruch 1, **dadurch gekennzeichnet, daß** die Alkoxylierungsreaktion bei einem leichten Überdruck bis 8 bar erfolgt.

3. Verfahren nach Anspruch 1 oder 2, **dadurch gekennzeichnet, daß** die Feststoffabtrennung in zwei Stufen durchgeführt wird, wobei eine Grobabtrennung bis zu einem Feststoffgehalt von 20 bis 300 ppm K⁺ vor und eine weitere Feinabtrennung nach der mehrstufigen Destillation erfolgt.

4. Verfahren nach einem der Ansprüche 1 bis 3, **dadurch gekennzeichnet, daß** die reaktiv-destillativen Schritte in zwei Stufen in einer Kombination aus einer Normaldruckkolonne und einer Vakuumkolonne oder aus zwei Vakuumkolonnen durchgeführt wird, wobei die Kolonnen mit Inertgas betrieben werden.

5. Verfahren nach einem der Ansprüche 1 bis 4, **dadurch gekennzeichnet, daß** das Rohpolyetherpolyol vor Eintritt in die erste reaktiv-destillative Stufe einen pH-Wert von 6,5 bis 9,5, einen Salzgehalt von 20 bis 300 ppm K⁺, einen Wassergehalt von 0,5 bis 5 Gew.-% und eine Temperatur von 120 bis 140°C aufweist und danach in einer Destillationskolonne bei Temperaturen von 140 bis 170°C und einem N₂-Durchsatz von 200 bis 500 m³/h behandelt wird.

6. Verfahren nach einem der Ansprüche 1 bis 5, **dadurch gekennzeichnet, daß** das vorbehandelte Polyetherol mit einem pH-Wert von 6,5 bis 9,5, einem Salzgehalt von 20 bis 300 ppm K⁺ und einem Wassergehalt von 0,01 bis 0,1 Gew.-% in einer zweiten Destillationskolonne bei einer Temperatur von 100 bis 120°C, einem N₂-Durchsatz von 20 bis 70 m³/h, einem Vakuum von 5 bis 30 mbar und einer Verweilzeit von 5 bis 30 min nachbehandelt wird.

7. Verwendung des nach einem der Ansprüche 1 bis 6 hergestellten Polyetherpolyols zur Herstellung von Polyurethanen.

## Claims

1. A process for preparing polyether polyols by base-catalyzed reaction of H-functional initiator substances with alkylene oxides, subsequent neutralization of the basic catalyst and a specific treatment of the crude product, wherein the treatment is a combination of a plurality of reactive distillation steps and a solids removal comprising a plurality of steps and is carried out at a pH of greater than or equal to 6.5 and the first reactive distillation step is carried out at a residual salt content of from 20 to 300 ppm of K⁺.

2. A process as claimed in claim 1, wherein the alkoxylation reaction is carried out at a slight gage pressure up to 8 bar.

3. A process as claimed in claim 1 or 2, wherein the solids removal is carried out in two stages, namely a rough removal down to a solids content of from 20 to 300 ppm of K⁺ before and a further fine removal after the multistage distillation.

4. A process as claimed in any of claims 1 to 3, wherein the reactive distillation steps are carried out in two stages in a combination of an atmospheric pressure column and a vacuum column or of two vacuum columns, where the columns are operated using inert gas.

5. A process as claimed in any of claims 1 to 4, wherein the crude polyether polyol has a pH of from 6.5 to 9.5, a salt content of from 20 to 300 ppm of K⁺, a water content of from 0.5 to 5% by weight and a temperature of from 120 to 140°C before entry into the first reactive distillation step and is then treated in a distillation column at from 140 to 170°C and an N₂ throughput of from 200 to 500 m³/h.

6. A process as claimed in any of claims 1 to 5, wherein the pretreated polyetherol having a pH of from 6.5 to 9.5, a salt content of from 20 to 300 ppm of K⁺ and a water content of from 0.01 to 0.1% by weight is after-treated in a second distillation column at from 100 to 120°C, an N₂ throughput of from 20 to 70 m³/h, a reduced pressure of from 5 to 30 mbar and a residence time of from 5 to 30 min.

7. The use of a polyether polyol prepared as claimed in any of claims 1 to 6 for producing polyurethanes.

## Revendications

1. Procédé pour la préparation de polyétherpolyols par la mise en réaction catalysée par une base de substances de départ à fonctionnalité H avec des oxydes d'alkylènes, suivie de la neutralisation du catalyseur basique et d'un traitement spécifique du produit brut, **caractérisé en ce que** le traitement est une combinaison de plusieurs étapes de réactions-distillations et d'une séparation des substances solides se déroulant en plusieurs étapes et est mis en oeuvre à une valeur de pH supérieure ou égale à 6,5 et la première étape de réaction-distillation a lieu à une teneur résiduelle en sel de 20 à 300 ppm de K⁺.

2. Procédé selon la revendication 1, **caractérisé en ce que** la réaction d'alcoxylation a lieu sous une légère surpression s'élevant jusqu'à 8 bar.

3. Procédé selon la revendication 1 ou 2, **caractérisé en ce que** la séparation des substances solides est mise en oeuvre en deux étapes, une séparation grossière jusqu'à l'obtention d'une teneur en substances solides de 20 à 300 ppm de K⁺ précédant la distillation en plusieurs étapes, celle-ci étant suivie d'une séparation fine ultérieure.

4. Procédé selon l'une quelconque des revendications 1 à 3, **caractérisé en ce qu'**on effectue les étapes de réaction-distillation dans deux étages dans une combinaison d'une colonne dans laquelle règne une pression normale et d'une colonne à vide ou de deux colonnes à vide, les colonnes étant mises en service avec un gaz inerte.

5. Procédé selon l'une quelconque des revendications 1 à 4, **caractérisé en ce que** le polyétherpolyol brut, avant son entrée dans la première étape de réaction-distillation, présente une valeur de pH de 6,5 à 9,5, une teneur en sel de 20 à 300 ppm de K⁺, une teneur en eau de 0,5 à 5 % en poids et une température de 120 à 140 °C, pour être ensuite traité dans une colonne de distillation à des températures de 140 à 170 °C et avec un débit d'azote de 200 à 500 m³/h.

6. Procédé selon l'une quelconque des revendications 1 à 5, **caractérisé en ce que** le polyétherpolyol, qui a été prétraité et qui présente une valeur de pH de 6,5 à 9,5, une teneur en sel de 20 à 300 ppm de K⁺ et une teneur en eau de 0,01 à 0,1 % en poids, est soumis à un traitement ultérieur dans une deuxième colonne de distillation à une température de 100 à 120 °C, dans des conditions de débit d'azote de 20 à 70 m³/h, de vide de 5 à 30 mbar et d'un temps de séjour de 5 à 30 minutes.

7. Utilisation du polyétherpolyol préparé conformément à l'une quelconque des revendications 1 à 6 pour la préparation de polyuréthanes.
